**Europäisches Patentamt**

**European Patent Office**

**Office européen des brevets**

(19)

(11) Veröffentlichungsnummer: **0 124 882**
**B1**

(12) **EUROPÄISCHE PATENTSCHRIFT**

(45) Veröffentlichungstag der Patentschrift:
18.03.87

(51) Int. Cl.⁴: **G 01 N 1/28**

(21) Anmeldenummer: **84104984.4**

(22) Anmeldetag: **03.05.84**

(54) Vorrichtung zum Aufsedimentieren von Teilen einer Probenflüssigkeit auf einen Objektträger.

(30) Priorität: **04.05.83 DE 3316335**

(43) Veröffentlichungstag der Anmeldung:
**14.11.84 Patentblatt 84/46**

(45) Bekanntmachung des Hinweises auf die Patenterteilung:
**18.03.87 Patentblatt 87/12**

(84) Benannte Vertragsstaaten:
**AT BE CH DE FR GB IT LI LU NL SE**

(56) Entgegenhaltungen:
**DE-A-1 598 156**
**FR-A-2 439 622**
**GB-A-2 046 940**
**US-A-3 456 876**

**PATENTS ABSTRACTS OF JAPAN, Band 6, Nr.**
**141(P-131)(1019), 30. Juli 1982;**
**Idem**

(73) Patentinhaber: **Firma Andreas Hettich,**
**Gartenstrasse 100, D-7200 Tuttlingen (DE)**

(72) Erfinder: **Eberle, Günter, Gartenstrasse 100, D-7200**
**Tuttlingen (DE)**

(74) Vertreter: **Riebling, Günter, Dr., Patentanwälte Dr.-**
**Ing., Dipl.- Ing., Ing.(grad) Günter Riebling Dr.-**
**Ing., Dipl.- Ing. Peter Riebling Rennerle 10**
**Postfach 3160, D-8990 Lindau (Bodensee) (DE)**

## Beschreibung

Die Erfindung betrifft eine Vorrichtung zum Aufsedimentieren von Teilen einer Probenflüssigkeit auf einen Objektträger, bei der das Probengefäß als Zentrifugengefäß ausgebildet ist, an dem der Objektträger befestigt ist.

Eine derartige Vorrichtung beschreibt die Druckschrift "Patent Abstracts of Japan, Bd. 6, Nr. 141 (P-131)". Wie dort der Objektträger am Probengefäß befestigt ist, kann dieser Druckschrift nicht entnommen werden.

Die FR-A-2 439 622 beschreibt ein als Zentrifugenröhrchen ausgebildetes Probengefäß mit einem lösbaren Verschluß.

Der Erfindung liegt die Aufgabe zugrunde, eine Vorrichtung der eingangs genannten Art vorzuschlagen, bei deren Verwendung es möglich ist, auf konstruktiv und arbeitstechnisch einfache Weise in einem einzigen Arbeitsgang Teile der Probenflüssigkeit auf den Objektträger aufzusedimentieren.

Zur Lösung dieser Aufgabe ist die eingangs genannte Vorrichtung erfindungsgemäß dadurch gekennzeichnet, daß das Probengefäß als Zentrifugenröhrchen ausgebildet ist, das mit einem lösbaren Verschluß versehen ist, an dessen innerer, in das Zentrifugenröhrchen ragender Stirnseite der Objektträger lösbar befestigt ist.

Man braucht somit lediglich das derart ausgebildeten Zentrifugenröhrchen in eine übliche Zentrifuge einzuhängen, wobei sich dann während des Zentrifugierens Teile der Probenflüssigkeit auf dem Objektträger aufsedimentieren. Gleichzeitig erfolgt die Trennung der Probenflüssigkeit in ein Sedimentationsprodukt und in einen Überstand. Nach Beendigung des Zentrifugierens muß man lediglich das Zentrifugenröhrchen öffnen und hat dann den Objektträger mit dem aufsedimentierten Sedimentationsprodukt zur Verfügung.

Nach der Erfindung wird ein so hergestelltes Zentrifugenröhrchen mit Verschluß und darin integriertem Objektträger mit seiner Verschlußseite nach unten in das Schleudergehänge eines Rotors einer Zentrifuge eingesetzt. Die Zentrifuge wird dann eingeschaltet und das Gehänge schwingt in üblicher Weise aus, wodurch die Probenflüssigkeit gegen den Objektträger verdrängt wird, und das Sediment sich mit fortlaufendem Zentrifugiervorgang am Objektträger selbsttätig absetzt.

Während des Zentrifugationsvorganges erfolgt also ein selbsttätiges Absetzen des Sedimentes auf dem Objektträger, ohne daß es der vorher beschriebenen, herkömmlichen Übertragungsschritt, bedarf.

Nach erfolgtem Zentrifugationsvorgang wird das Zentrifugenröhrchen umgedreht, so daß die gesamte Flüssigkeit nach unten fließt. Die Verschlußkappe mit dem darin enthaltenen Objektträger wird abgenommen und der Objektträger wird aus der Verschlußkappe entnommen. Der Objektträger ist nun sofort für weitere Untersuchungen fertig vorbereitet, weil auf ihm bereits schon das Sediment aufgeschichtet ist.

Weiterer, wesentlicher Vorteil des beschriebenen Verfahrens und der Vorrichtung ist, daß der Objektträger nur so groß sein muß, wie es für das Einbringen in das Zentrifugenröhrchen erforderlich ist. Dies ist ganz entscheidend für die Lagerhaltung und für die Dokumentation, wenn man vorher bekannte Objektträger damit vergleicht. Die bisher bekannten Objektträger bestehen aus länglichen, rechteckigen Glastafelchen, auf denen nur zu einem geringen Prozentsatz das eigentliche Objektträgerfeld (Untersuchungsfeld) aufgebracht ist. Diese Untersuchungsfläche beträgt bestenfalls 20 bis 30 % der gesamten Fläche des Objektträgers.

Ein nach der Erfindung klein ausgebildeter Objektträger ist für die Lagerhaltung und für die Dokumentation von großer Wichtigkeit, weil alle überflüssigen Felder - wie sie bei den bisher bekannten Objektträgern bekannt sind - entfallen können. Das dem Objektträger zuzuordnende Beschriftungsfeld wird in anderer, später noch zu beschreibender Weise angebracht.

Nach der Erfindung wird also ein relativ kleiner Objektträger vorgeschlagen, der die Probeninformation als solches enthält, und die darüber hinaus gehenden Flächen des Glases werden eingespart.

Hierdurch erfolgt nicht nur eine Platzeinsparnis, sondern auch eine wesentliche Kostenersparnis.

Weiterer, wesentlicher Vorteil ist, daß das Zentrifugenröhrchen mit der Schraubkappe und mit dem darin eingebrachten Objektträger als Einmal-Artikel für den Versand dienen kann. Hierdurch werden wiederum wesentliche Zeit und Kosten eingespart.

Ferner ist wesentlich, daß am Ort der Probenentnahme, dies kann aus sämtlichen Körperöffnungen und sämtlichen Körperteilen des Menschen erfolgen, die entnommene Probe in das Zentrifugenröhrchen erbracht wird und das Zentrifugenröhrchen dann verschickt wird und immer geschlossen bleibt, bis das Sediment auf dem Objektträger während des Zentrifugiervorganges aufgebracht ist und der Objektträger aus dem Zentrifugenröhrchen entfernt wurde. Hierdurch wird eine wesentlich verbesserte Probensicherheit und eine Sicherung gegen Verwechslungen gewährleistet.

Ein weiteres Ausführungsbeispiel der Erfindung besteht darin, daß man den Probenabstrich mit Hilfe eines Probenträgers (z.B. eines Wattestäbchens) unmittelbar in das Zentrifugenröhrchen verbringt, wobei der Probenträger in der Probenflüssigkeit eintaucht und der Probenträger (z.B. Wattestäbchen) fest in dem Probenröhrchen fixiert wird und mit diesem zusammen verschickt wird. Im Labor wird dann das Zentrifugenröhrchen nicht geöffnet, sondern der Probenträger wird mitzentrifugiert, wobei er in seiner Befestigung verbleibt. Auch hier bedarf es keiner Öffnung des Zentrifugenröhrchens, bis daß der Objektträger fertig beschichtet ist.

Weiteres, wesentliches Merkmal der Erfindung ist, daß die aus dem Probenröhrchen entnommenen und fertig beschichteten Objektträger auf Karten oder Stoffbänder im Abstand aufgebracht werden, wobei jedem Objektträger auf der Karte eine zugeordnete Beschriftung beigefügt ist. Das Aufbringen der Objektträger auf den Karten oder Stoffbändern erfolgt durch Kleben oder durch Einlegen in vorbestimmte Aufnahmeöffnungen. Es können damit beliebig lange Bänder von Objektträgern hergestellt werden, die in der Art eines Gurtes von automatischen Diagnosemaschinen weiter verarbeitet werden.

Mit der Erfindung wird also nicht nur ein neues und zeitsparendes Zentrifugationssystem beschrieben, sondern darüber hinaus auch noch ein Probenuntersuchungssystem, das dadurch gekennzeichnet ist, daß mehrere Objektträger in gegenseitigem Abstand auf einer Karte befestigt sind, wobei jedem Objektträger ein Beschriftungsfeld auf der Karte zugeordnet ist.

Der Erfindungsgegenstand der vorliegenden Erfindung ergibt sich nicht nur aus dem Gegenstand der einzelnen Patentansprüche, sondern auch der Kombination der einzelnen Patentansprüche untereinander.

Alle in den Unterlagen offenbarten Angaben und Merkmale, insbesondere die in den Zeichnungen dargestellte, räumliche Ausbildung werden als erfindungswesentlich beansprucht, soweit sie einzeln oder in Kombination gegenüber dem Stand der Technik neu sind.

Im folgenden wird die Erfindung anhand von mehreren Ausführungswege darstellenden Zeichnungen näher erläutert. Hierbei gehen aus den Zeichnungen und Ihrer Beschreibung weitere erfindungswesentliche Merkmale und Vorteile der Erfindung hervor.

Es zeigen:

Fig. 1 Schnitt durch eine erste Ausführungsform eines Zentrifugierröhrchens;

Fig. 2 Schnitt durch eine zweite Ausführungsform;

Fig. 3 Schnitt durch eine dritte Ausführungsform mit eingebrachtem Probenträger;

Fig. 4 Draufsicht auf eine mit Objektträgern und Beschriftungsfeldern versehene Karte;

Fig. 5 Teilschnitt durch eine vierte Ausführungsform eines Zentrifugierröhrchens.

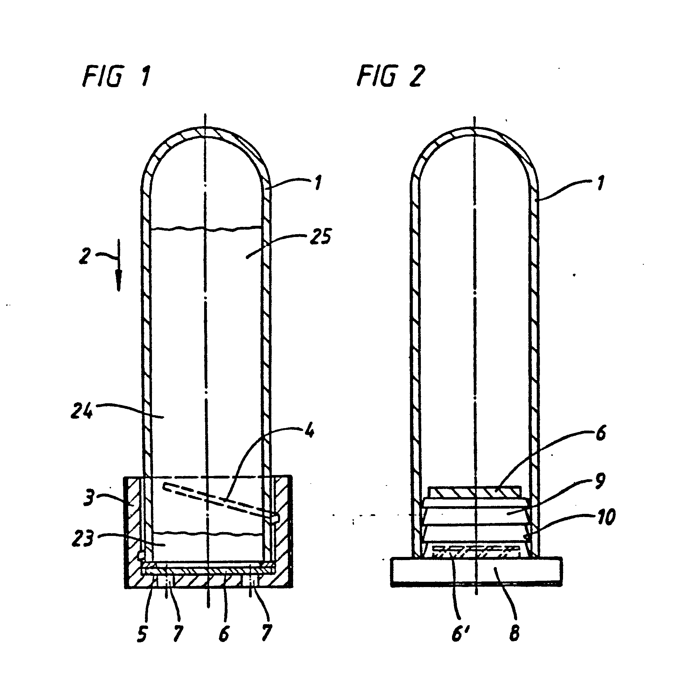

Bei der in Fig. 1 gezeigten Ausführungsform ist das Zentrifugenröhrchen 1 mit einem Schraubgewinde 4 versehen, auf dem eine Schraubkappe 3 mit zugeordnetem Innengewinde aufgeschraubt ist. An der Innenseite der Schraubkappe 3 ist der aus Glas bestehende Objektträger 6 angeordnet, der mit einer Dichtscheibe 5 gegenüber dem Rand des Zentrifugenröhrchens 1 und dem Verschluß der Schraubekappe 3 abgedichtet ist.

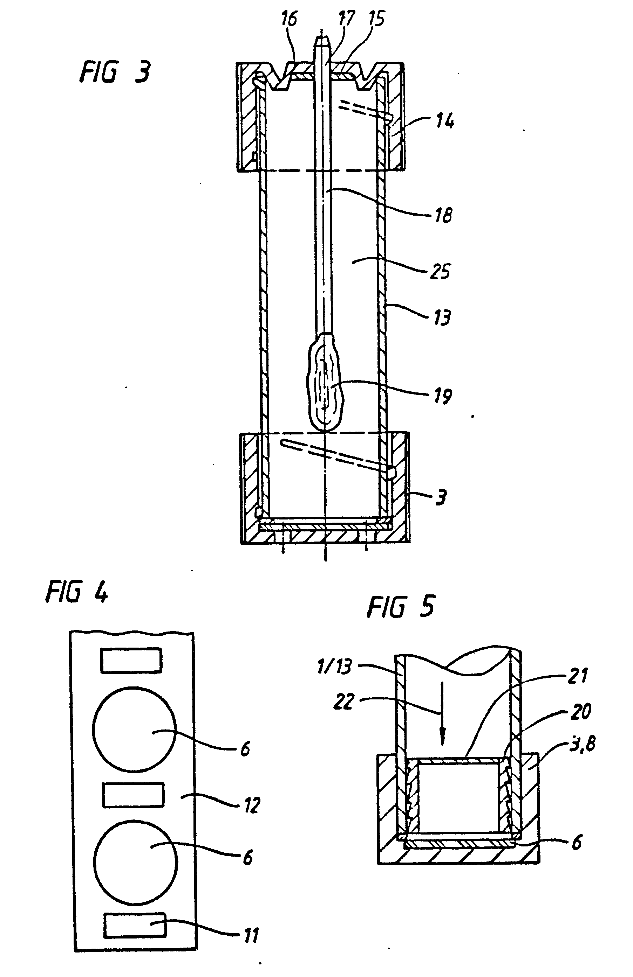

Mit der Probenflüssigkeit 25 gefüllte Zentrifugenröhrchen 1 wird nun mit der Schraubkappe 3 nach unten gerichtet in das Schleudergehänge einer Zentrifuge eingesetzt, wobei das Schleudergehänge in an sich bekannter Weise während des Zentrifugationsvorganges ausschwingt und das Zentrifugenröhrchen 1 eine horizontale Lage einnimmt. Die Zentrifugationskraft wird hierbei in Pfeilrichtung 2 auf die Probenflüssigkeit 25, die sich nach erfolgtem Zentrifugationsvorgang in ein Sedimentationsprodukt 23 und in einen Überstand 24 auftrennt. Das Sedimentationsprodukt lagert sich aufgrund der in Pfeilrichtung 2 wirkenden Zentrifugationskraft fest auf dem Objektträger 6 ab. Nach beendetem Zentrifugationsvorgang wird das Zentrifugenröhrchen 1 aus der Zentrifuge entnommen und umgedreht, wodurch die sich nicht auf dem Objektträger abgelagerten Teile des Sedimentationsproduktes 23 mit dem Überstand 24 wieder mischen und in den abgerundeten Bodenteil des Zentrifugenröhrchens 1 zurückfließen. Die Schraubkappe 3 wird dann entnommen, und durch die Auswurföffnungen 7 im Deckel der Schraubkappe 3 wird ein Instrument eingeführt, was beispielsweise als Gabel mit Zinken ausgebildet sein kann, und der Objektträger 6 wird hierbei von dem Innenraum der Schraubkappe 3 entfernt. Der fertig beschichtete Objektträger wird dann auf die in Fig. 4 gezeigte Karte 12 aufgebracht und gleichzeitig wird ein Beschriftungsfeld 11 zugeordnet. Die Karte 12 kann beliebig lang sein, so daß mehrere Objektträger hintereinanderfolgend in gegenseitigem Abstand auf der Karte 12 befestigt sind.

In Fig. 2 ist eine weitere Ausführungsform gezeigt, wo ein Zentrifugenröhrchen 1 mit einem Verschlußstopfen 8 verschlossen ist. Der Verschlußstopfen 8 hat an seinem Innenteil 9 Widerhaken 10, die sich abdichtend an der Innenseite des Zentrifugenröhrchens 1 anlegen. Der Objektträger kann hierbei auf der Stirnseite des Innenteils 9 des Verschlußstopfens 8 angebracht sein, oder - wie es in der gestrichelten Ausführung gezeigt ist - in Form des Objektträgers 6' an der Bodenfläche des Verschlußstopfens 8. Sofern der Objektträger 6 an der Stirnseite des Innenteils 9 angebracht ist, muß er gegen die einwirkende Zentrifugalkraft durch nicht näher dargestellte Rippen oder andere Verstärkungen gegenüber der Bodenfläche des Verschlußstopfens abgestützt werden.

In Fig. 3 ist erkennbar, daß bei einem Zentrifugenröhrchen 13 eine untere Schraubkappe in der in Fig. 1 dargestellten Art vorgesehen ist, daß aber gleichzeitig das andere Ende des Zentrifugenröhrchens 13 durch eine weitere Schraubkappe 14 verschließbar ist, an deren Deckel-Innenseite eine Dichtungsscheibe 15 angeordnet ist und in deren Deckel 16 eine Bohrung 17 zum Einsetzen des Stäbchens 18 eines Wattestäbchens 19 vorgesehen ist. Auf diese Weise wird das mit der Untersuchungsprobe beschichtete Wattestäbchen 19 mit seinem Stab 18 durch die Dichtungsscheibe 15 in die Bohrung 17 im Deckel 16 eingeführt und dort gehalten. Die Befestigung erfolgt auf beliebige Art, z.B. durch Verklemmen, Verschweißen, Verkleben oder durch thermisches Verformen des Stäbchenmaterials.

In das Zentrifugenröhrchen 13 wird dann bei geöffneter Schraubkappe 3 ein Untersuchungsmedium, z.B. Alkohol, eingefüllt und die Schraubkappe 3 wird dann geschlossen.

Das so fertig zugerichtete Zentrifugenröhrchen 13 ist dann versandfertig und wird dann unmittelbar zentrifugiert, wobei das Wattestäbchen 19 im Zentrifugenröhrchen 13 verbleibt.

In Fig. 5 ist ein weiteres Ausführungsbeispiel gezeigt, was die besondere Art eines Verschlußstopfens zeigt, der mit den Ausführungsformen nach Fig. 1 bis 3 verwendbar ist. Innen an der Schraubkappe 3, 8 setzt ein hohlzylindrischer Stopfe 20 an, dessen lichte Öffnung von einem Sieb 21 verschlossen ist. Die Anordnung eines inneren Siebes 21 hat den wesentlichen Vorteil, daß während des Zentrifugiervorganges Fremdkörper bestimmter Größenordnung vom Objektträger ferngehalten werden. Der Flüssigkeitsstrom wird damit in Pfeilrichtung 22 durch das Sieb 21 während des Zentrifugiervorganges gedrückt und gelangt damit in gefilterter Form auf den Objektträger 6, wo sich das Sedimentationsprodukt 23 ablagert.

**Patentansprüche**

1. Vorrichtung zum Aufsedimentieren von Teilen einer Probenflüssigkeit auf einen Objektträger (6; 6'), bei der das Probengefäß als Zentrifugengefäß ausgebildet ist, an dem der Objektträger (6; 6") befestigt ist, dadurch gekennzeichnet, daß das Probengefäß als Zentrifugenröhrchen (1; 13) ausgebildet ist, das mit einem lösbaren Verschluß (3; 8) versehen ist, an dessen innerer, in das Zentrifugenröhrchen (1; 13) ragender Stirnseite der Objektträger (6; 6') lösbar befestigt ist.

2. Vorrichtung nach Anspruch 1, dadurch gekennzeichnet, daß der Verschluß als Schraubkappe (3) ausgebildet ist.

3. Vorrichtung nach Anspruch 1, dadurch gekennzeichnet, daß der Verschluß als Verschlußstopfen (8) ausgebildet ist.

4. Vorrichtung nach einem der Ansprüche 1 bis 3, dadurch gekennzeichnet, daß zwischen dem umlaufenden, stirnseitigen Rand des Zentrifugenröhrchens (1, 13) eine Dichtungsscheibe (5) angeordnet ist, an deren anderen Seite der Objektträger (6, 6') anliegt.

5. Vorrichtung nach einem der Ansprüche 1 bis 4, dadurch gekennzeichnet, daß die Schraubkappe (3) oder der Verschlußstopfen (8) mit einem inneren, in das Zentrifugenröhrchen (1, 13) ragenden, hohlzylindrischen Stopfen (20) verbunden sind, in dessen lichter Öffnung ein Sieb (21) angebracht ist.

6. Vorrichtung nach Anspruch 5, dadurch gekennzeichnet, daß der Objektträger (6') auf oder im hohlzylindrischen Stopfen (9, 20) befestigt ist.

7. Vorrichtung nach einem der Ansprüche 1 bis 6, dadurch gekennzeichnet, daß das Zentrifugenröhrchen (13) an der dem Verschluß (3, 8) gegenüberliegenden Stirnseite offen ist und dort mit einem weiteren Verschluß (14) verschließbar ist, der mit einem in die Probenflüssigkeit (25) tauchenden Probenträger (18, 19) verbunden ist.

8. Vorrichtung nach einem der Ansprüche 1 bis 7, dadurch gekennzeichnet, daß mehrere der Objektträger (6, 6') in gegenseitigem Abstand auf einer Karte (12) befestigt sind und daß ein Beschriftungsfeld (11) auf der Karte (12) angeordnet ist.

9. Vorrichtung nach Anspruch 8, dadurch gekennzeichnet, daß die Karte (12) als beliebig langer, maschinenverarbeitbarer Gurt ausgebildet ist.

**Claims**

1. Device for sedimentation of parts of a sample liquid on a slide (6; 6') with the sample tube being formed as a centrifuge tube fastened to the slide (6; 6'), characterized as: that the sample tube is designed in a form of a centrifuge tube (1; 13) sealed by a releasable closure (3; 8) against whose inner end pointing into the centrifuge tube, a slide (6; 6') is releasable fastened.

2. Device according to Claim 1, characterized as: that the closure is formed as a threaded cap (3).

3. Device according to Claim 1, characterized as: that the closure is formed as a stopper (8).

4. Device according to one of Claims 1 to 3, characterized as: that a sealing disk (5) is disposed between the circumferential end edge of the centrifuge tube (1, 13), on the other side of which the slide (6; 6') is fitted.

5. Device according to one of Claims 1 to 4, characterized as: that the threaded cap (3) or the stopper (8) is connected with an inner hollow cylindrical plug (20) extending into the centrifuge tube (1, 13) and wherein a screen (21) is mounted on an open end of said cylindrical plug (20).

6. Device according to Claim 5, characterized as: that the slide (6') is fastened on or in the hollow cylindrical plug (9, 20).

7. Device according to one of the Claims 1 to 6, characterized as: that the centrifuge tube (13) is open at the end opposite to the closure (3, 8) and an additional closure (14) is provided for closing the other end of the tube, said additional closure is connected with a sample carrier (18, 19) immersed in the sample liquid (25).

8. Device according to one of the Claims 1 to 7, characterized as: that several slides (6, 6') are placed on a card (12) arranged at a predetermined spacing from each other and that a marking area (11) is provided on said card (12).

9. Device according to Claim 8, characterized as: that the card (12) is a machine-processable belt of a predetermined length.

**Revendications**

1. Dispositif pour la sédimentation de particules d'un échantillon liquide sur un porte-objet (6; 6'), dispositif dans lequel le récipient de l'échantillon est constitué par un récipient de centrifugation auquel le porte-objet (6; 6') est fixé, caractérisé en ce que le récipient de l'échantillon est réalisé sous la forme d'un tube de centrifugation (1; 13) qui est muni d'un organe de fermeture amovible (3; 8), le porte-objet (6; 6') étant fixé de façon détachable sur la face frontale intérieure, pénétrant dans le tube de centrifugation (1; 13), dudit organe de fermeture.

2. Dispositif selon la revendication 1, caractérisé en ce que l'organe de fermeture est constitué par un capuchon fileté (3).

3. Dispositif selon la revendication 1, caractérisé en ce que l'organe de fermeture est constitué par un bouchon de fermeture (8).

4. Dispositif selon l'une des revendications 1 à 3, caractérisé en ce que sur le bord libre frontal périphérique du tube de centrifugation (1, 13), est disposée une rondelle d'étanchéité (5), le porte-objet (6, 6') s'appliquant sur l'autre face de cette rondelle d'étanchéité.

5. Dispositif selon l'une des revendications 1 à 4, caractérisé en ce que le capuchon fileté (3) ou le bouchon de fermeture (8) est relié à un bouchon cylindrique creux intérieur (20) qui pénètre dans le tube de centrifugation (1, 13) et dans l'ouverture intérieure duquel est monté un filtre (21).

6. Dispositif selon la revendication 5, caractérisé en ce que le porte-objet (6') est fixé sur ou dans le bouchon cylindrique creux (9, 20).

7. Dispositif selon l'une des revendications 1 à 6, caractérisé en ce que, sur sa face frontale opposée à l'organe de fermeture (3, 8), le tube de centrifugation (13) est ouvert et peut être obturé à cet endroit à l'aide d'un second organe de fermeture (14) qui est relié à un porte-échantillon (18, 19) plongeant dans l'échantillon liquide (25).

8. Dispositif selon l'une des revendications 1 à 7, caractérisé en ce que plusieurs porte-objets (6, 6') sont fixés à intervalles mutuels sur une carte (12) et en ce qu'une case d'inscription (11) est ménagée sur la carte (12).

9. Dispositif selon la revendication 8, caractérisé en ce que la carte (12) est constituée par une sangle apte à être usinée et présentant une longueur quelconque.

FIG 1

FIG 2

FIG 3

FIG 4

FIG 5